# EUROPEAN PATENT APPLICATION

(11) **EP 2 590 119 A1**
(43) Date of publication of application: **08.05.2013**
(21) Application number: 11187384.0
(22) Date of filing: 01.11.2011
(51) Int. Cl.: G06Q 10/06

(54) **Project report generator**

(71) Applicant: Byskov, Tommy, 4583 Sjællands Odde (DK)
(72) Inventor: Byskov, Tommy, 4583 Sjællands Odde (DK)
(74) Representative: Nielsen, Henrik Sten

(57) **Abstract**

The present invention relates to a system for generating a project report for a building project. The building project includes a plurality of project tasks. The system comprises a computer based punch list database capable of storing a set of punch list documents. Each of the punch list documents including a task identification number, a task status, a due date, a task price, an information object and a task responsible person. The task status being a first state representing a new task, a second state representing an open task, a third state representing a successfully finished task and a fourth state representing an unsuccessfully finished task. The system is capable of selecting among the set of punch list documents in the punch list database, establishing a project report based on the selected set of punch list documents and printing or displaying the project report on a printer or display,

## Description

The present invention relates to a method and a system for generating a project report for a building project. The present invention also relates to the preparation and handling of punch lists

### Background

Building projects of any considerable size typically involves a plurality of different project tasks which must be finished in order for the building project to be deemed completed Building projects should in the present context be understood in a broad context and may involve various construction projects performed on various building structures such as the construction of houses, multi storey buildings, sport arenas, airports, roads, railways, bridges, ships and oil rigs. It is contemplated that the building project may involve not only the construction of new building structures but also the renovation of existing building structures.. The project tasks may e.g. define the construction or installation of different constructive parts of the building structure. One project task may e.g. be the task of casting the foundation of the building. Another project task may be the task of building the wall of the building. Yet other tasks may involve the installation of doors and windows into the proper position in the previously constructed wall. It is contemplated that some tasks may be dependent on the completion of a previous task, e.g. the task of building a wall necessarily requires that the task of casting the foundation has been successfully completed The project tasks may also involve pure administrative tasks such as the conduction of project meetings and the obtainment of building certificates and building permissions from different authorities. In reality, the project tasks are typically very specific, e.g. the connection of a specific electrical wire between an electrical outlet in the building structure and the electrical mains Medium- and large scale building projects typically involve several persons or companies having different roles in the building projects such as architects, designers, civil engineers, construction companies acting as the general contractor or sub contractors performing some or all project tasks of the building project

In order for the future proprietor to ensure that the general contractor and all subcontractors have performed their assigned tasks a to-do list is established. Such a to-do list is in the building industry typically called a punch list. The punch list typically includes a detailed description of each task of the building project At the end of building project, or when reaching particular mile-stones during the building project, the future proprietor or a building inspector appointed by the future proprietor or the general contractor may go through the punch list and check all tasks which have been successfully completed. This allows the future proprietor to ensure that the specified tasks have been completed and, if tasks which have not been successfully completed exist, to withhold payment for those tasks.

In the past, the punch lists were generated in paper form and updated continuously during the building project Traditionally, the commissioner then punches a hole in the punch list for marking the completion of the task. Any project reports were to be established manually by going through a large amount of old punch lists. Nowadays, electronic punch lists are more common.. Today, it's contemplated that computer based systems are replacing paper punch lists in order to have a complete overview It is further contemplated that a handheld electronic device may replace the paper punch lists. Such electronic punch lists allow the user to access punch list data located centralized on a server Some examples of relevant prior art is now to be briefly discussed below..

US 2003/0135401 relates to a computerized system to monitor, track, and indicate trends through each of the phases of a given construction project. US 5,761,674 relates to a building system. The process model has elements which are described as hierarchical objects in a stream of productive activities. US 5,016,170 relates to task management. Information provided on dependencies in the tasks are set out graphically on the screen. WO 2005/029250 relates to an information system to be used by companies and subcontractors, including workflow and business rules. WO 2008/103225 relates to a tracking system for use in connection with oil and gas drilling rigs. WO 20111/037987 relates to a management system for use in all activities required to implement various processes, and dependencies, conditions and timelines for each activity US 2006/0277172 relates to a system for resolving outstanding issues or items associated with one or more tasks or projects US 2011/0037764 relates to a material management system for a building site. US 2006/0010005 relates to a system for control of building structures incorporating a land module, a money module, a product module, a worker module, a purchasing module and an integration module. US 7,089,203 relates to a bid system for monitoring and controlling the execution of a contract to eliminate errors. US 2010/0174656 relates to a system for coordinating construction activities. The system provides a computerized system for mapping of digital media for electronic punch-lists. US 2010/0198652 relates to a computerized system for controlling building repair projects by generating a project plan that provides a timetable for work to be performed on the repair project US 2007/0112788 relates to a management system and a method for the construction of buildings or other projects US 2009/0174768 relates to a program for collecting photos of site conditions US 2009/0248796 relates to a system and a method for creating and utilizing an electronic punch list. US 2009/0276273 relates to a method for creating a punch list from deficiency data. The updated deficiency data is accessed to inspect and supervise the construction project Each deficiency item has the status "open" or "closed" However, a completely new punch list is generated to handle the deficiencies.

In the present context and in order to be able to generate project reports reflecting the complete building process, there is a need for methods and systems for generating project report from all tasks of a building project, even such tasks which have been successfully completed or which were refused at an early stage It is therefore an object of the present invention to provide methods and systems for generating project punch lists from all stages of the building process. A particular advantage according to the present invention is that the punch list database may be used for monitoring all aspects of the building project, from the first design phase to the final evaluation phase

### Summary of the invention

The above object, the above advantages and the above feature together with numerous other objects, advantages and features which will be evident from the below detailed description of the present invention are according to the teachings of the present invention obtained by a method of generating a project report for a building project, the building project including a plurality of project tasks, the method comprising the steps of:
providing a computer based punch list database,
storing a first set of punch list documents in the punch list database, each of the punch list documents representing a project task of the plurality of project tasks and including:
   a task identification number uniquely identifying the project task among the plurality of project tasks,
   a task status indicating the approval state of the project task, the task status initially being set to a first state representing a new and unattended project task,
   a due date indicating the last date for solving or rejecting the project task,
   a task price indicating the estimated total costs for completing the project task,
   an information object providing information relating to the project task, and
   a task responsible person indicating a user name of a person or company responsible for carrying out the project task,
      altering one of the punch list documents in the punch list database by:
   changing the task status from the first state to a new state being one of a second state representing an open task presently under implementation, a third state representing a finished task which has been successfully completed and a fourth state representing a finished task which has not been successfully completed such as a rejected task,
   optionally changing any of the due dates, task prices, information objects and task responsible person,
selecting among the first set of punch list documents in the punch list database:
   a second set of punch list documents including all punch list documents of the first set of punch list documents having the same task status as a pre-determined project task status, and/or
   a third set of punch list documents including all punch list documents of the first set of punch list documents having the same task responsible as a pre-determined task responsible person, and/or
   a fourth set of punch list documents including all punch list documents of the first set of punch list documents having the same due date as a pre-determined due date or all punch list documents of the first set of punch list documents having the due date either before or after the pre-determined due date, and/or
   a fifth set of punch list documents including all punch list documents of the first set of punch list documents having the same task price as a pre-determined task price or punch list documents of the first set of punch list documents having the task price either below or above the pre-determined task price,
   establishing a project report based on the selected set of punch list documents and including for each punch list document of the selected set of punch list documents at least one of its information objects and its project task identification numbers, and
   printing or displaying the project report on a printer or display connected to the computer based punch list database

The computer based punch list database may be implemented on a personal computer or laptop computer, however, it is preferably implemented on a central server and accessible by all persons and companies involved in the project by means of a network connection The plurality of punch list documents included in the building project is stored in the punch list database. Each punch list document describes one specific project task of the building project Each punch list document therefore should have a task identification number for uniquely identifying the task among the plurality of tasks. In case the punch list database includes punch list documents belonging to another building project, the task identification number may also uniquely indentify the project task in relation to any document stored in the punch list database.

Surprisingly it has been found by the applicant that a project task typically is in one of four project states The first state, representing a new and unattended project task, is the design and engineering state in which the punch list document and all technical drawings and technical descriptions are established by the future proprietor, typically in collaboration with civil engineers, designers and architects For most building projects, the most important project tasks are established at about the same time, before the actual construction work commences Other project tasks that are to be implemented far into the future may be established at a later time Typically, all details of the project task are defined at this state and entered into the punch list document, such as the details of the task, the responsible general contractor or sub-contractor, the price for completing the task and the due date when the task should be finished As stated above, almost all tasks are depending on one or more previous tasks and thus a delay in one task may delay the whole building project.

The second state is the implementation phase in which state the general contractor or sub-contractor is working on the task. The second state is typically entered by an approval of the task. The approval may constitute the signing of an agreement between the person or company intended to perform the task, e g the sub-contractor, and the person or company in charge of establishing the task in the first phase, e.g. the future proprietor.

The third state is the evaluation state at which the commissioner of the building project, i.e. the future proprietor or the building inspector, checks whether the task has been successfully completed or not The third state is started when the person or company intended to perform the task, e.g. the sub-contractor, has finished the task and the person or company in charge of establishing the task in the first phase, e.g. the future proprietor, agrees that the task has been finished according to the agreement established at the end of the first phase The third state is started when the project task has been solved by the general contractor or sub-contractor..

Further, a project task may be rejected, i.e. cancelled, in the first phase, e.g. in case the signing of an agreement between the person or company intended to perform the task, e g the sub-contractor, and the person or company in charge of establishing the task in the first phase, e.g. the future proprietor, fails, or, the future proprietor finds that the project task is not necessary and does not gives the approval thereof The project task may also be cancelled in the second phase by the person or company in charge of establishing the task in the first phase for a number of reasons including changed priorities for the future proprietor, financial reasons, or, a failure during the implementation or any other reason. When the project task is cancelled, it is assigned the fourth state

It is contemplated that the project report must at least include the identification number in order for the user to uniquely identifying the task. In order to monitor and document the progress of the building project, the future proprietor may establish a project report e.g. including all new tasks, all open tasks, all completed tasks or all rejected tasks. Further, access may be given to the subcontractors or construction workers to see which tasks are currently open

The project task document also includes a due date indicating the last day for solving or rejecting the task. The due date is important in order to keep the time table of the building projects since many project tasks have subsequent project tasks which are dependent on the previous project task being completed The subcontractor responsible for the project task thus has an indication when it is expected that the task is being performed. At the same time, the future proprietor or the building inspector may observe which project tasks are behind schedule and may concentrate their efforts in ensuring that the delayed project tasks are completed as quickly as possible. A project report may be established listing all project tasks which are behind schedule In this way measures may be taken in order to avoid delays in the future

The project task document may also include a task price estimating the total cost for completing the project task.. Such task price may in the first phase be an estimation based on the technical description, in the second phase the negotiated price at which the subcontractor has agreed to perform the task, in the third phase the final price which may include extra charges or discounts received by the subcontractor, and in the fourth phase the price at which the negotiations with the sub-contractor were interrupted The future proprietor may access the punch list database and establish project reports for monitoring the cost of the building project.

The project task document may also include an information object. The information object describes the task and what needs to be done The information object may develop during the different stages, eg at the first state it may include drawings and calculations of the planned task, in the second state it may include information about the implementation of the task such as any particular problems encountered and solved, in the third state it may include information about the result of the task such as operating instruction and in the fourth state it may include information about the reason why the task was cancelled.

The task responsible person is typically the sub-contractor or construction worker responsible for carrying out the task in the second stage. Alternatively, the general contractor or building inspector is the responsible person for all states. Yet alternatively, the task responsible person may change during the different stages, such that in the first state the task responsible person is the design engineer, in the second state the task responsible person is the construction worker, in the third state the task responsible person is the building inspector and in the fourth state the task responsible person is the future proprietor The task responsible person makes it easy for the future proprietor to find out which person or company to contact in case problems or delays occur.

The task status may be changed by the future proprietor, the task responsible person or any other person designated to do so At the same time, any other details of the punch list document may optionally be altered such as the due date, task price, information object or task responsible person

All task document belonging to the same building project is stored as a set of punch list documents, i.e. the first set of punch list documents, in the punch list database. Before generating the project report, the user may select the predetermined details on which the project report should be established.. By providing pre-determined details, e.g. all punch list documents having a pre-determined task status, e.g. the second state for selecting all open tasks, a sub-set of the first set, i.e. the second set of punch list documents, may be established.. The predetermined status is typically established by the user just before generating the project report. The predetermined status may also be established in advance in order to automatically generate reports. As stated above, further sets of punch list documents may be established by defining a pre-determined task responsible person, a pre-determined due date or a pre-determined price It is contemplated that combinations of punch list document details may be selected as well, such as a set of punch list documents including all punch list documents having a pre-determined project task and a pre-determined task responsible person, or any other combinations of e.g. task price, task responsible person, task status and due date.

The project report may include all of the documents of the first set of punch list documents, i.e. all project tasks.. Preferably, however, the project report includes any of the other sets of punch list documents. The project report need not include all details of the punch list documents, however, it is contemplated that at least one of the project task identification numbers and the information objects is included in order for the user to identify the project task Any other details may optionally be included as well, such as the due date, the task status, the task price and the task responsible person.

According to a further embodiment of the first aspect, each of the punch list documents further include a priority label indicating the degree of importance of the project task, e.g. low, medium or high, and wherein the method further includes the steps of:
selecting in the punch list database: a sixth set of punch list documents including all punch list documents of the first set of punch list documents having the same priority label as a pre-determined priority label,
establishing a further project report based on the sixth set of punch list documents and including for each punch list document of the sixth set of punch list documents at least one of its information objects and its project task identification numbers, and
printing or displaying the further project report on a printer or display connected to the computer based punch list database

The priority, e.g. low, medium and high, may be set by the future proprietor in order to direct the resources to the most important parts of the building Essential project tasks involving parts of the building structure on which other project task depend and which project task therefore will result in a delay of the project if not completed in time, such as the foundation or the walls of a building, may be given the priority "high" Other tasks which are not essential and on which no other task depend may be given low priority. Other tasks may be given medium priority Thus, in case of a shortage in building resources, a project report may be generated based on the priority, and the available building resources may be diverted from the low priority tasks to the high priority tasks

According to a further embodiment of the first aspect, each of the punch list documents further include an option of including a statement indicating the results or problems experienced while executing of the task and wherein the method further including the steps of:
selecting in the punch list database: a seventh set of punch list documents all having the statement,
establishing a further project report based on the seventh set of punch list documents and including for each punch list document of the seventh set of punch list documents the statement and at least one of its information objects and its project task identification numbers, and
printing or displaying the further project report on a printer or display connected to the computer based punch list database.

Typically, during a large building project, at least some project tasks cannot be completed exactly according to the plan or design established during the first state, or other surprising or unexpected events or results occur. In such cases, a statement may be included in the punch list document describing the event and/or result For instance, it may be that two parts which are intended to be interconnected do not fit together. This constitutes a lesson to be learned for the future. Alternatively, a more efficient solution to a task may be found during the project and a statement relating to the new efficient procedure may be included in the statement. The statement may be included in the punch list document and a project report may be generated including all punch list documents having such a statement Such a project report may be consulted during a future project in order to avoid making the same mistakes twice or, alternatively to make future projects more efficient by learning from past experiences.

According to a further embodiment of the first aspect, each of the punch list documents further include a start date and/or an approval date indicating the date on which the task was started and/or approved and wherein the method further includes the steps of:
selecting in the punch list database: an eighth set of punch list documents including all punch list documents of the first set of punch list documents having the same start date and/or the approval date as a pre-determined start date and/or the approval date or all punch list documents of the first set of punch list documents having the start date and/or the approval date either before or after the pre-determined start date and/or the approval date,
establishing a further project report based on the eighth set of punch list documents and including for each punch list document of the eighth set of punch list documents at least one of its information objects and its project task identification numbers, and
printing or displaying the further project report on a printer or display connected to the computer based punch list database

In order to further monitor the project progress, a start date and/or approval date may be included in the punch list document. The start date indicates a date on which the implementation of the project task may be started as decided by the designer or future proprietor, and may be connected with a status change from the first state to the second state, and the approval date indicates a date when the building inspector has actually approved the project task and may be connected with a status change from the second state to the third state

According to a further embodiment of the first aspect, the task status cannot be set to the second state before the start date has been reached and/or wherein the task status cannot be set to the third state before the approval date has been reached In some cases the start date and/or the approval date may be set in the future in order to let a delayed project task catch up By determining that the task status cannot be set to the second state before the start date has been reached and/or wherein the task status cannot be set to the third state before the approval date has been reached, it may be ensured that a pre-determined time table is held and that no project task is started or ended prematurely

According to a further embodiment of the first aspect, each of the punch list documents further include a construction type defining a specific building project and/or a punch type defining a main task includes several tasks and wherein the method further including the steps of:
selecting in the punch list database: an ninth set of punch list documents including all punch list documents of the first set of punch list documents having the same construction type and/or punch type as a pre-determined construction type and/or punch type,
establishing a further project report based on the ninth set of punch list documents and including for each punch list document of the ninth set of punch list documents at least one of its information objects and its project task identification numbers, and
printing or displaying the further project report on a printer or display connected to the computer based punch list database.

The punch list database may include several construction projects. In order to differentiate between the projects, the punch list document may include a construction type Similarly, a punch type may define a particular part of the construction project, e.g. living room, bedroom 1, bathroom etc in case the construction project involves building a small one family house. A project report may be established covering the relevant construction project or punch type only..

According to a further embodiment of the first aspect, each of the punch list documents further include a task creator and/or a task approver indicating a further user name of the person or company establishing the project task and/or approving the project task,

selecting in the punch list database: a tenth set of punch list documents including all punch list documents of the first set of punch list documents having the same task creator and/or task approver as a pre-determined task creator and/or task approver,

establishing a further project report based on the tenth set of punch list documents and including for each punch list document of the tenth set of punch list documents at least one of its information objects and its project task identification numbers, and

printing or displaying the further project report on a printer or display connected to the computer based punch list database

Typically, not every user of the project database has the permission to create tasks or approve tasks The punch list document may therefore include the user name of the task creator who may establish a project task being in the first state. The task approver may then be the user who may change the status during the task A project report may be established showing the task creator and/or task approver. In this way it may be ensured that the task has been created and/or approved by the right person or company.

According to a further embodiment of the first aspect, the punch list database includes a password protected user database, the user database including the user name and, if present, the further user name, the task status of the punch list document can only be modified by users included in the user database. The user names put into the punch list document may only be selected from a user database The database requires a password for entering a particular user into the punch list document. In this way it may be ensured that no one tampers with the user database..

According to a further embodiment of the first aspect, when altering one of the punch list documents in the punch list database, the task status may only be changed from the first state into the second state or the fourth state, and/or, from the second state into the third state or the fourth state.. In this way it may be avoided that, by mistake, a task is changed from the first state to the third state, thus bypassing the second implementation phase

According to a further embodiment of the first aspect, the project report further includes task information associated with either the first state, second state, third state or fourth state being different from the task status of the set of punch list documents In order to monitor the progress of the project task during the different phases, task information may be stored including specific task relevant details. As an example, in case a problem is revealed and permanently solved during the first state, it may be recorded as a task information and when the task status is changed from the first state to e g the second state, the task information belonging to the first state is stored and does not show up in the punch list document in relation to the second state. When the third state is reached, a project report may be established including all task information of all states

According to a further embodiment of the first aspect, the punch list document includes one or more sub-tasks, each of the sub-tasks representing a project sub-task and including a unique sub-task identification number, a sub-task status and a sub-task information object relating to the project sub-task, the sub-task status being selected from the first state, the second state, the third state and the fourth state. The punch list document may include sub-tasks which must all be completed before the project task may be completed Thus, in order to change from the second state to the third state of the project task, all sub-task statuses must be changed from the second sub-state to the third sub-state

According to a further embodiment of the first aspect, the information object includes one or more descriptions of the task, a picture of the task and a hyperlink to a document describing the task The information object may include text describing the task in general terms and in detail.. In order to include a large amount of details, a hyperlink to other documents stored in the punch list database or another file storage may be used Pictures of the task may be included as well, such as technical drawings or CAD sketches of the task. Once the task is opened or finished, photos may be included as documentation.

According to a further embodiment of the first aspect, each of the punch list documents further include a first reference or hyperlink to a subsequent punch list document within the punch list database, and/or, wherein each of the punch list documents further include a second reference to a previous punch list document within the punch list database. The punch list document may relate to project tasks which depend on other tasks which are to be performed after finishing the present task, or other tasks may depend on the present task to be finished before commencing In this way, such tasks may be identified and any bottleneck may be avoided or detected in good time

According to a further embodiment of the first aspect, the task status of the subsequent punch list documents cannot be changed into either the second state, third state or fourth state until the task status of the punch list document has been changed into the third state, and/or the task status of the punch list document cannot be changed into either the second state, third state or fourth state until the task status of the previous punch list documents has been changed into the third state. In order not to engage construction workers or sub-contractors in subsequent tasks in vain in case the project task is delayed, the subsequent task cannot be started before the previous task has been finished.

The above object, the above advantages and the above feature together with numerous other objects, advantages and features which will be evident from the below detailed description of the present invention are according to the teachings of the present invention obtained by a system for generating a project report for a building project, the building project including a plurality of project tasks, the system comprising a computer based punch list database, the punch list database being capable of storing a first set of punch list documents in the punch list database, each of the punch list documents representing a project task of the plurality of project tasks and including:
a task identification number uniquely identifying the project task among the plurality of project tasks,
a task status indicating the approval state of the project task, the task status being a first state representing a new task, a second state representing an open task presently under implementation, a third state representing a finished task which has been successfully completed and a fourth state representing a finished task which has not been successfully completed such as a rejected task,
a due date indicating the last date for solving or rejecting the project task,
a task price indicating the estimated total costs for completing the project task,
an information object providing information relating to the project task, and
a task responsible person indicating a user name of a person or company responsible for carrying out the project task,
   the system being capable of selecting among the first set of punch list documents in the punch list database:
a second set of punch list documents including all punch list documents of the first set of punch list documents having the same task status as a pre-determined project task status, and/or
a third set of punch list documents including all punch list documents of the first set of punch list documents having the same task responsible person as a pre-determined task responsible person, and/or
a fourth set of punch list documents including all punch list documents of the first set of punch list documents having the same due date as a pre-determined due date or all punch list documents of the first set of punch list documents having the due date either before or after the pre-determined due date, and/or
a fifth set of punch list documents including all punch list documents of the first set of punch list documents having the same task price as a pre-determined task price or all punch list documents of the first set of punch list documents having the task price either below or above the pre-determined task price,
   the system being capable of establishing a project report based on the selected set of punch list documents and including for each punch list document of the one or more sets of punch list documents any of its information objects and its project task identification numbers, and printing or displaying the project report on a printer or display connected to the computer based punch list database

It is contemplated that the method according the first aspect may be implemented on a system according to the second aspect.

### Brief description of the drawings

Fig. 1 shows a server computer and a laptop computer constituting the computer based punch list database.
Fig. 2 shows a general and some specific embodiments of a user interface according to the present invention
Fig. 3 shows a spreadsheet printout from the punch list database
Fig. 4 shows reports generated by the present system.

### Detailed description of the drawings

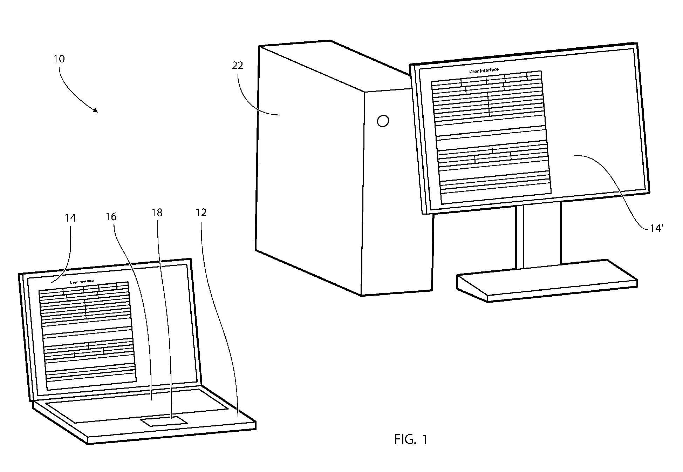

Fig 1 shows a presently preferred embodiment of a system for generating project reports 10. The system for generating project reports 10 comprises a laptop computer 12 having a display 14, a keyboard 16 and a touchpad 18 A user interface 20 of a computer based punch list database is visible on the display 14 and will be discussed in more detail below The laptop computer 12 is connected via wireless technology to a server computer 22 which is storing the computer based punch list database The server computer 22 may optionally have a display 14'

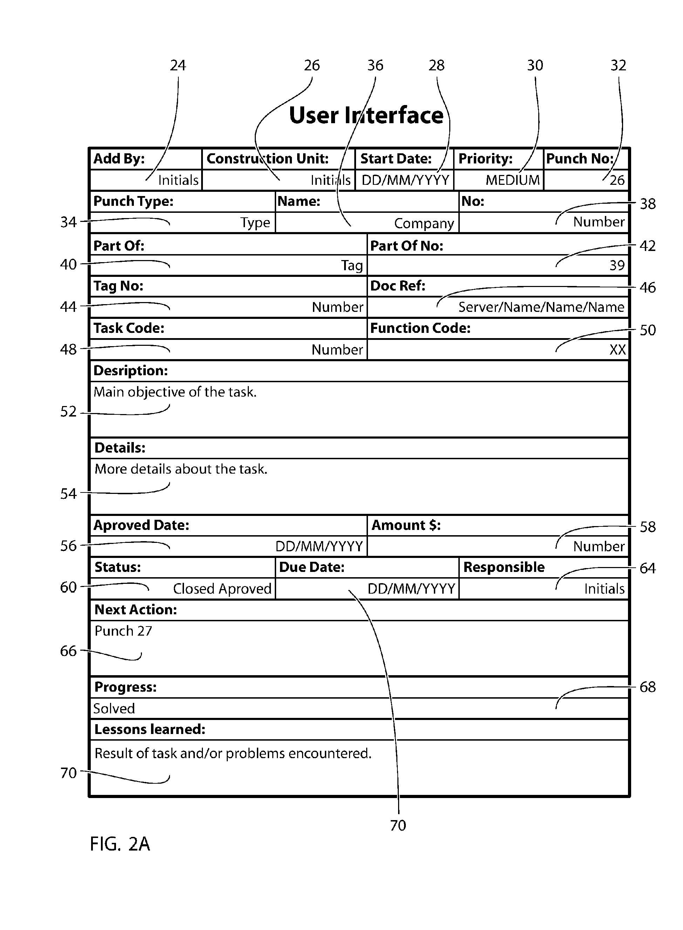

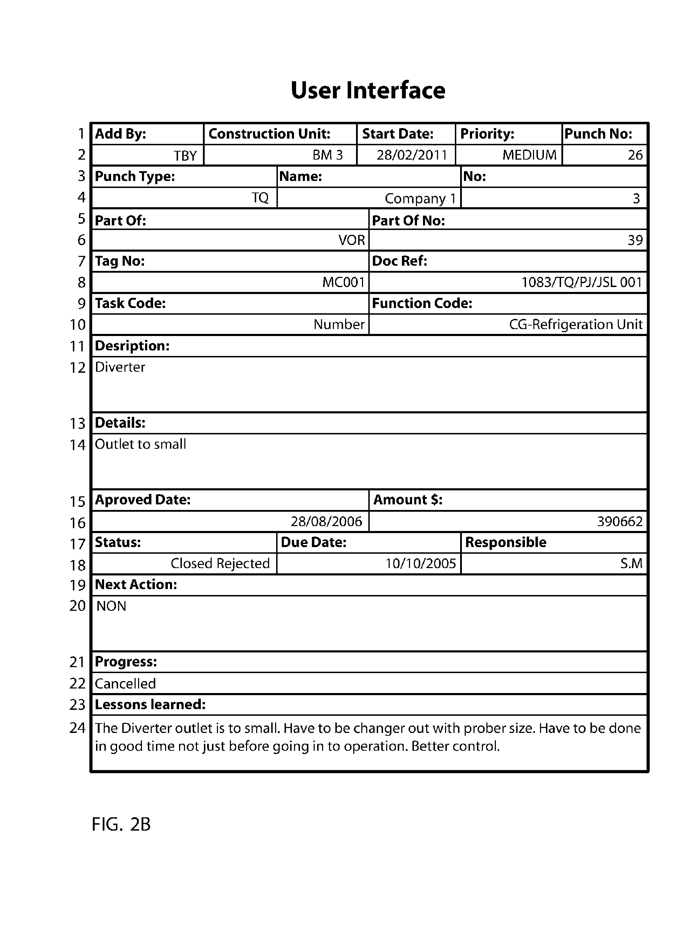

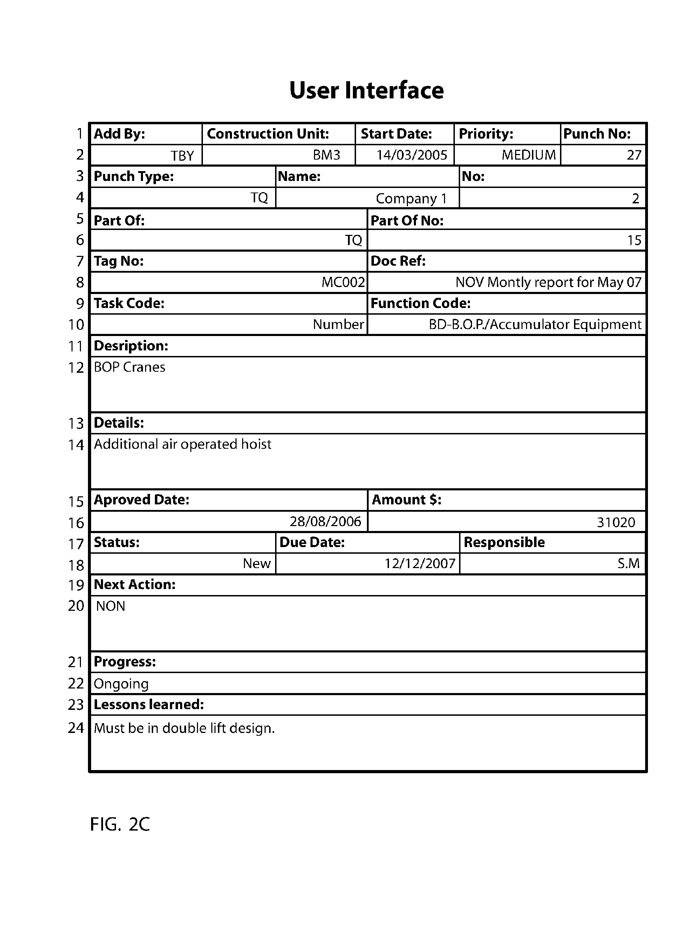

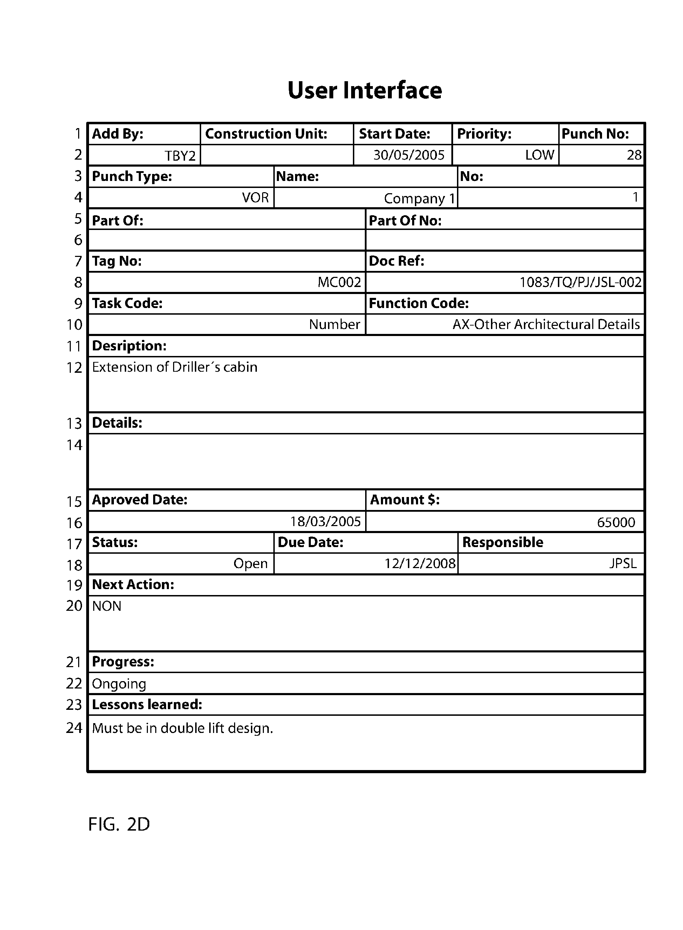

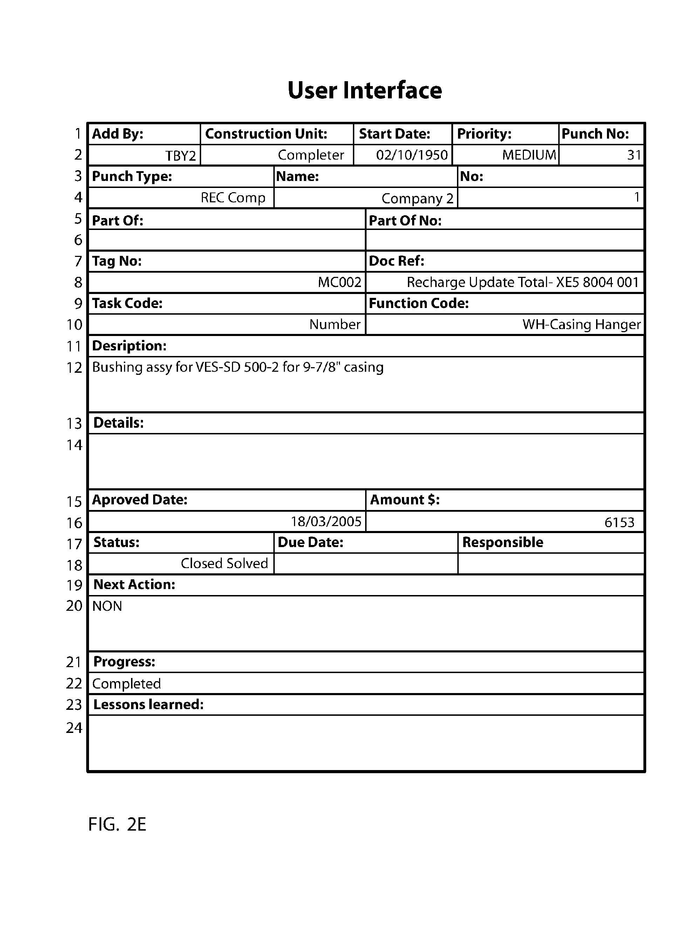

Fig. 2 shows a generalized view of the user interface 20 of the computer based punch list database The user interface 20 comprises a plurality of data fields establishing a punch list document relating to a project task and which data fields are now to be discussed: An 'add by' field 24 indicating the initials of the person creating the project task. A 'construction unit' field 26 indicating the initials of the building project. A 'start date' field 28 indicating the date on which the implementation of the task is starting A 'priority' field 30 indicating the priority level of the task and user selectable between low, medium or high A 'punch no' field 32 indicating a unique identification number of the project task which may be user selected but is preferably selected automatically by the computer based punch list database. A 'punch type' field 34 indicating which part of the building project the project task concerns. A 'name' field 36 indicating the name of the future proprietor of the building construction. A 'no' field 38, indicating a reference number of the future proprietor A 'part of field 40 indicating, in addition to the 'punch type' field 34, which part of the building project the project task concerns A 'part of no' field 42 indicating a number of the part of the building project the project task concerns. A 'tag no' field 44 indicating a further optional reference number of the project task. A 'doc ref' field 46 indicating the server name, path name and file name of the stored punch list document. A 'task code' field 48 indicating a brief description of the project task A 'function code' 50 indicating the function of the task. A 'description' field 52 indicating the information of the task. A 'details' field 54 indicating optional additional detailed information relating to the project task. An 'approved date' field 56 indicating the date at which the task was deemed to be successfully completed. An 'amount $' field 58 indicating the total price for performing the project task.. A 'status' field 60 being alterable between one of four states namely "new" indicating a new and unattended project task, "open" indicating a project task presently under implementation, "closed solved" indicating a finished project task which has been successfully completed, and, "closed rejected" indicating a finished project task which has not been successfully completed. A 'due date' field 62 indicating the date on which the task should be successfully completed according to the project plan. A 'responsible' field 64 indicating the initials of the person in charge of implementing the project task.. A 'next action' field 66 indicating a previous and/or a subsequent punch list document by its unique identification number A 'progress' field 68 indicating whether the project task is completed, ongoing or cancelled A 'lessons learned' field 70 indicating any unexpected result or problems encountered while performing the project task
Figs 2B-2E show screen printouts from an actual building project The four task documents being in the respective states of "closed rejected", "new", open" and "closed solved", corresponding to the fourth state, first state, second state and third state

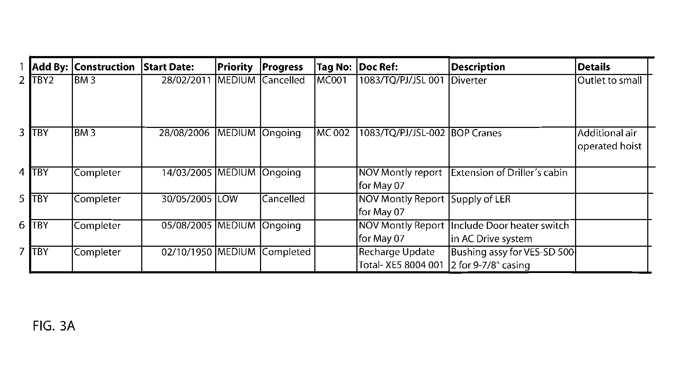

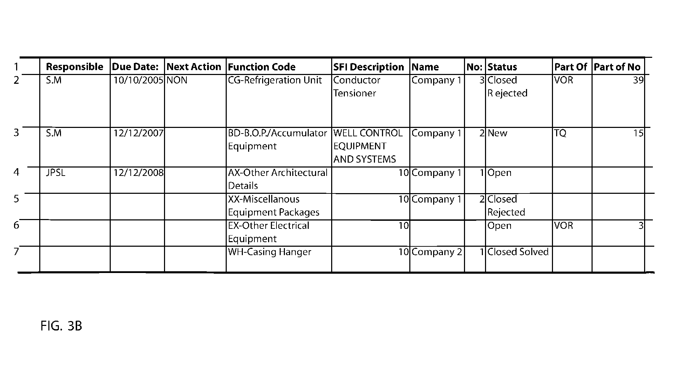

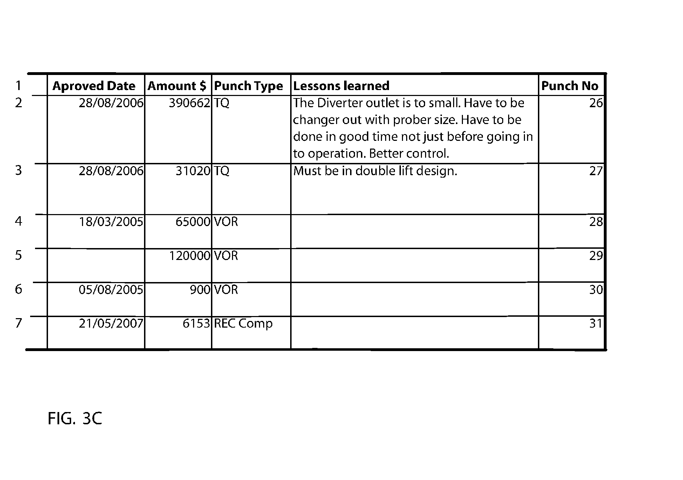

Figs. 3A-C show a spreadsheet printout being split over three pages of the whole task database comprising in total of six task documents

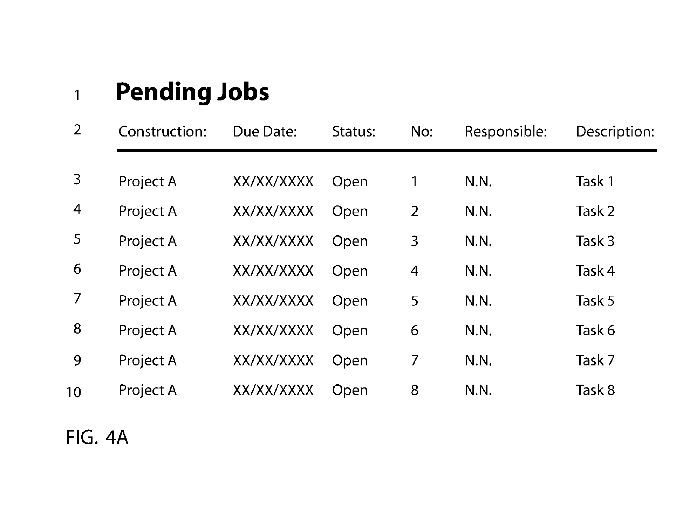

Fig 4A shows a generalized report showing all pending jobs and including the construction project, the due date for the task, the status of the task, the punch list number, the responsible person and the task description.

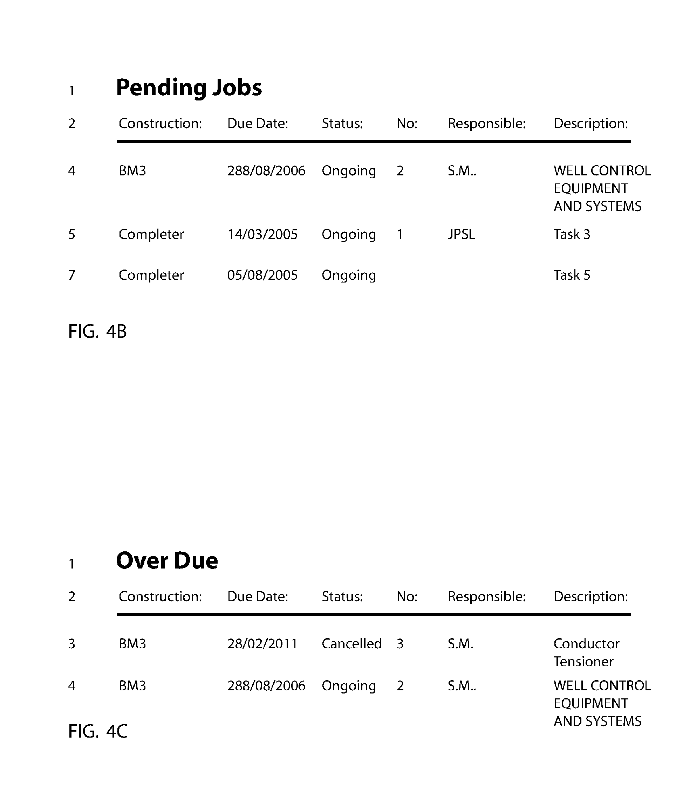

Fig. 4B shows a report including all tasks of the database which are currently pending, i.e. being in the open/second state.
Fig 4C shows a report including all tasks of the database which are currently overdue, i.e. where the due date has already been passed

"Person" should in the present context be understood as encompassing personal names as well as company names.

## Claims

1. A method of generating a project report for a building project, said building project including a plurality of project tasks, said method comprising the steps of:
providing a computer based punch list database,
storing a first set of punch list documents in said punch list database, each of said punch list documents representing a project task of said plurality of project tasks and including:
a task identification number uniquely identifying said project task among said plurality of project tasks,
a task status indicating the approval state of said project task, said task status initially being set to a first state representing a new and unattended project task,
a due date indicating the last date for solving or rejecting said project task,
a task price indicating the estimated total costs for completing said project task,
an information object providing information relating to said project task, and
a task responsible person indicating a user name of a person or company responsible for carrying out said project task, altering one of said punch list documents in said punch list database by:
changing said task status from said first state to a new state being one of a second state representing an open task presently under implementation, a third state representing a finished task which has been successfully completed and a fourth state representing a finished task which has not been successfully completed such as a rejected task,
optionally changing any of said due dates, task prices, information objects and task responsible person,
selecting among said first set of punch list documents in said punch list database:
a second set of punch list documents including all punch list documents of said first set of punch list documents having the same task status as a pre-determined project task status, and/or
a third set of punch list documents including all punch list documents of said first set of punch list documents having the same task responsible as a pre-determined task responsible person, and/or
a fourth set of punch list documents including all punch list documents of said first set of punch list documents having the same due date as a pre-determined due date or all punch list documents of said first set of punch list documents having said due date either before or after said pre-determined due date, and/or
a fifth set of punch list documents including all punch list documents of said first set of punch list documents having the same task price as a pre-determined task price or punch list documents of said first set of punch list documents having said task price either below or above said pre-determined task price,
establishing a project report based on said selected set of punch list documents and including for each punch list document of said selected set of punch list documents at least one of its information objects and its project task identification numbers, and
printing or displaying said project report on a printer or display connected to said computer based punch list database

2. The method according to any of the preceding claims, wherein each of said punch list documents further include a priority label indicating the degree of importance of said project task, e.g. low, medium or high, and wherein said method further includes the steps of:
selecting in said punch list database: a sixth set of punch list documents including all punch list documents of said first set of punch list documents having the same priority label as a pre-determined priority label,
establishing a further project report based on said sixth set of punch list documents and including for each punch list document of said sixth set of punch list documents at least one of its information objects and its project task identification numbers, and
printing or displaying said further project report on a printer or display connected to said computer based punch list database.

3. The method according to any of the preceding claims, wherein each of said punch list documents further include an option of including a statement indicating the results or problems experienced while executing of said task and wherein said method further including the steps of:
selecting in said punch list database: a seventh set of punch list documents all having said statement,
establishing a further project report based on said seventh set of punch list documents and including for each punch list document of said seventh set of punch list documents said statement and at least one of its information objects and its project task identification numbers, and
printing or displaying said further project report on a printer or display connected to said computer based punch list database.

4. The method according to any of the preceding claims, wherein each of said punch list documents further include a start date and/or an approval date indicating the date which the task was started and/or approved and wherein said method further includes the steps of:
selecting in said punch list database: an eighth set of punch list documents including all punch list documents of said first set of punch list documents having the same start date and/or said approval date as a pre-determined start date and/or said approval date or all punch list documents of said first set of punch list documents having said start date and/or said approval date either before or after said pre-determined start date and/or said approval date,
establishing a further project report based on said eighth set of punch list documents and including for each punch list document of said eighth set of punch list documents at least one of its information objects and its project task identification numbers, and
printing or displaying said further project report on a printer or display connected to said computer based punch list database

5. The method according to claim 4, wherein said task status cannot be set to said second state before said start date has been reached and/or wherein said task status cannot be set to said third state before said approval date has been reached.

6. The method according to any of the preceding claims, wherein each of said punch list documents further include a construction type defining a specific building project and/or a punch type defining a main task including several tasks and wherein said method further includes the steps of:
selecting in said punch list database: an ninth set of punch list documents including all punch list documents of said first set of punch list documents having the same construction type and/or punch type as a pre-determined construction type and/or punch type,
establishing a further project report based on said ninth set of punch list documents and including for each punch list document of said ninth set of punch list documents at least one of its information objects and its project task identification numbers, and
printing or displaying said further project report on a printer or display connected to said computer based punch list database

7. The method according to any of the preceding claims, wherein each of said punch list documents further include a task creator and/or a task approver indicating a further user name of the person or company establishing the project task and/or approving the project task,
selecting in said punch list database: a tenth set of punch list documents including all punch list documents of said first set of punch list documents having the same task creator and/or task approver as a pre-determined task creator and/or task approver,
establishing a further project report based on said tenth set of punch list documents and including for each punch list document of said tenth set of punch list documents at least one of its information objects and its project task identification numbers, and
printing or displaying said further project report on a printer or display connected to said computer based punch list database

8. The method according to any of the preceding claims, wherein said punch list database includes a password protected user database, said user database including said user name and, if present, said further user name, said task status of said punch list document can only be modified by users included in said user database,

9. The method according to any of the preceding claims, wherein, when altering one of said punch list documents in said punch list database, said task status may only be changed from said first state into said second state or said fourth state, and/or from said second state into said third state or said fourth state..

10. The method according to any of the preceding claims, wherein said project report further includes task information associated with either said first state, second state, third state or fourth state being different from said task status of said set of punch list documents

11. The method according to any of the preceding claims, wherein said punch list document includes one or more sub-tasks, each of said sub-tasks representing a project sub-task and including a unique sub-task identification number, a sub-task status and a sub-task information object relating to said project sub-task, said sub-task status being selected from said first state, said second state, said third state and said fourth state

12. The method according to any of the preceding claims, wherein said information object includes one or more descriptions of said task, a picture of said task and a hyperlink to a document describing said task

13. The method according to any of the preceding claims, wherein each of said punch list documents further include a first reference or hyperlink to a subsequent punch list document within said punch list database, and/or, wherein each of said punch list documents further include a second reference to a previous punch list document within said punch list database,

14. The method according to claim 13, wherein the task status of said subsequent punch list documents cannot be changed into either the second state, third state or fourth state until said task status of said punch list document has been changed into said third state, and/or said task status of said punch list document cannot be changed into any of the second state, third state or fourth state until the task status of said previous punch list documents has been changed into said third state.

15. A system for generating a project report for a building project, said building project including a plurality of project tasks, said system comprising a computer based punch list database, said punch list database being capable of storing a first set of punch list documents in said punch list database, each of said punch list documents representing a project task of said plurality of project tasks and including:
a task identification number uniquely identifying said project task among said plurality of project tasks,
a task status indicating the approval state of said project task, said task status being a first state representing a new task, a second state representing an open task presently under implementation, a third state representing a finished task which has been successfully completed and a fourth state representing a finished task which has not been successfully completed such as a rejected task,
a due date indicating the last date for solving or rejecting said project task,
a task price indicating the estimated total costs for completing said project task,
an information object providing information relating to said project task, and
a task responsible person indicating a user name of a person or company responsible for carrying out said project task,
said system being capable of selecting among said first set of punch list documents in said punch list database:
a second set of punch list documents including all punch list documents of said first set of punch list documents having the same task status as a pre-determined project task status, and/or
a third set of punch list documents including all punch list documents of said first set of punch list documents having the same task responsible person as a pre-determined task responsible person, and/or
a fourth set of punch list documents including all punch list documents of said first set of punch list documents having the same due date as a pre-determined due date or all punch list documents of said first set of punch list documents having said due date either before or after said pre-determined due date, and/or
a fifth set of punch list documents including all punch list documents of said first set of punch list documents having the same task price as a pre-determined task price or all punch list documents of said first set of punch list documents having said task price either below or above said pre-determined task price,
said system being capable of establishing a project report based on said selected set of punch list documents and including for each punch list document of said one or more sets of punch list documents any of its information objects and its project task identification numbers, and printing or displaying said project report on a printer or display connected to said computer based punch list database.
